# EUROPEAN PATENT SPECIFICATION

(11) **EP 1 657 004 B1**
(45) Date of publication and mention of the grant of the patent: **24.03.2010**
(21) Application number: 04425805.1
(22) Date of filing: 28.10.2004
(51) Int. Cl.: B21C 47/24, B21B 1/46, C21D 9/68

(54) **Process and production line for manufacturing hot ultrathin steel strips with two casting lines for a single endless rolling line**
Verfahren und Produktionsanlage zur Herstellung von heissen ultradünnen Stahlbändern mit zwei Anlagen zum stranggiessen für eine einzelne kontinuierliche Waltzstrasse
Procédé et ligne de production pour la fabrication de bandes ultrafines en acier présentant deux lignes de coulée pour une seule ligne de laminage en continu

(43) Date of publication of application: 17.05.2006
(73) Proprietor: ARVEDI, Giovanni, I-26100 Cremona (IT)
(72) Inventor: Arvedi, Giovanni, 26100 Cremona CR (IT); Manini, Luciano, 26010 Azzanello CR (IT); Soldi, Giacomo, 26040 Derovere CR (IT); Bianchi, Andrea Teodoro, 26034 Piadena CR (IT)
(74) Representative: Adorno, Silvano

(56) References cited:
- EP-A- 0 321 733
- WO-A-00/59650
- WO-A-94/29042
- WO-A-97/46332
- US-A- 4 698 897
- US-A- 6 053 996

## Description

The present invention relates to a production line for manufacturing ultrathin hot strips, comprising two casting lines for thin slabs and a single rolling line for endless operation, i.e. without solution of continuity, as well as the corresponding process of production.

For the manufacturing of hot steel strips it is known to use thin slab plants which allow that two casting lines and one rolling mill are connected to each other, but there has never been provided the possibility of rolling the product to obtain ultrathin strips continuously.

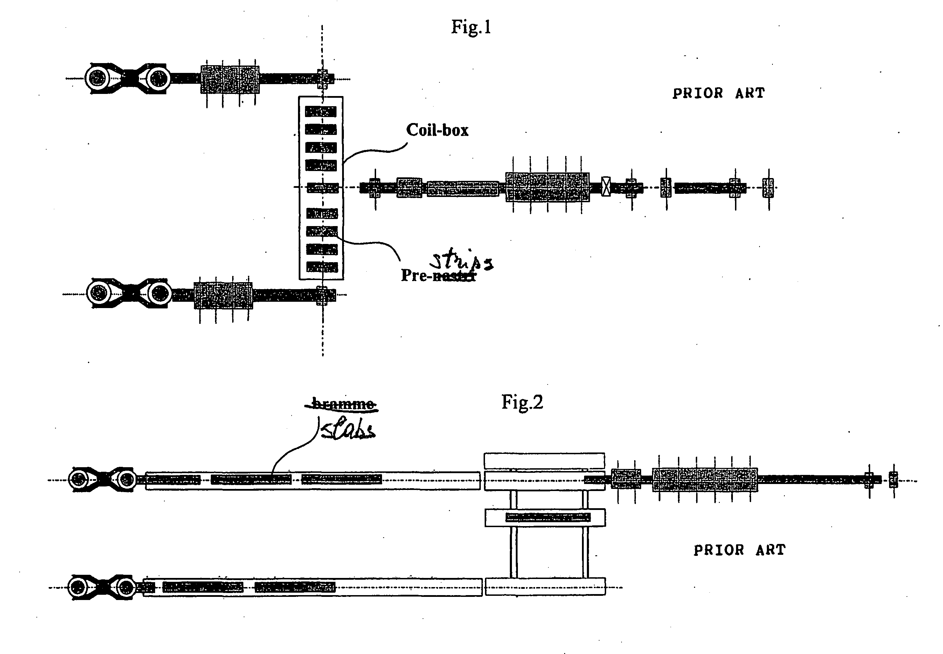

In a known thin slab plant with two casting lines the rolling mill has been positioned centrally between the two lines to which it is connected through a "coil-box" at the inside of which a pre-strip, wound on itself, is transferred each time to the rolling mill by means of "step by step" or "walking-beam" systems. Therefore it is unavoidable that the rolling mill feeding is interrupted and an endless rolling cannot take place without solution of continuity, as it clearly results from the representation of this prior art technique, as shown in fig. 1.

A second way of producing hot strips from two casting lines with a single rolling mill provides for two long tunnel furnaces, each aligned with the respective casting line and only one of them aligned with the rolling mill, wherein the single slabs, each of which corresponding to a single coil, are heated at the inside of said furnaces. Both of them have the end portion formed as an independent section that can be moved from one line to the other and has a sufficient length to contain entirely a section of slab corresponding to a coil. Thus it is possible to roll also the slabs of the second casting line, which is not aligned with the rolling line. However there are still problems for a possibly endless rolling operation both under technological aspects, due to an excessively low speed at entering the rolling mill, which is the same as the casting speed, and for technical problems relating to the handling of a single lab of about 300 meters length at the inside of a heating furnace. This solution is schematically shown in Fig. 2.

EP 1196256, in the name of the present applicant, discloses in a system for producing ultrathin strips the use of two casting lines connected to a rolling mill in a central position, being fed from four furnaces with inner mandrels to allow winding/unwinding steps of a pre-strip, capable of rotating and shifting at the same time towards the central area where the rolling mill is located. But also this solution is unable to obtain a rolling operation which is actually "endless", since the rolling mill is not co-axial with any of the two casting lines, whereby a displacement of the furnaces therefrom to the rolling mill is always necessary. Furthermore the times required by the cycle of "transfer-rotation and subsequent return" of the four furnaces are very narrow and critical, especially in concomitance of interventions on the rolling mill, such as the replacement of rolls during the casting sequence, as it is required in any case winding of pre-strips weighing at least 50 tons to reduce the narrowness of the cycle time. As a consequence the dimensioning of the equipments would become excessive and the relevant plant system very complex and burdensome from the viewpoint of costs.

The same considerations are valid with respect to WO 94/29042, also in the name of the present applicant, according to which the unwinding unit is again staggered with regard to both the casting lines and the only difference from EP 1196256 consists in the fact that only the mandrels on which the coils are wound, instead of the entire furnace, are movable,

Therefore it is an object of the present invention to provide a production line that, by overcoming the prior art inconveniences, allows the manufacturing of hot steel strips from two casting lines with the additional possibility of choosing to have an endless rolling, i.e. without any discontinuity, from only one casting line, i.e. the one that is aligned with the rolling line. Similarly it is also an object of the present invention to provide a process for the manufacturing of hot ultrathin strips of steel wherein the rolling of product from two distinct lines takes place in respect of single strips and, from one of said lines, without solution of continuity.

It has been found that, with one of the casting lines being aligned with the rolling mill and having the pre-strip at its outlet a thickness of less than 30 mm, the latter can be conveyed directly to the final rolling step, as instead this could not be made with the above-mentioned prior art systems. Both in the first (Fig. 1) and third case (EP 1196256) in fact the pre-strips coming from the casting lines would have a speed suitable for an endless rolling, but the rolling mill is not aligned with any of both lines, whereas in the second case (Fig. 2) the rolling mill is aligned with one of the two casting lines, but however there is a solution of continuity due to the fact that the slabs being fed in turn to the rolling mill correspond each one to a single coil, whereby are separated from each other.

Another object of the present invention is also that of solving the problem of the critical time, which is peculiar of the prior art as pointed out above, because when transferring only one pair of heating furnaces, sufficient ranges of time are allowed for the usual operations of normal or emergency maintenance.

A further object of the present invention is also that of providing the possibility of a safer management of two casting lines being interconnected to each other by means of superimposed furnaces, being provided of internal mandrel and capable of producing at least two million tons/year of hot steel strip and, at the same time, performing an endless rolling for manufacturing thin strips of a thickness lower than 1 mm.

Yet another object of the present invention is that of reducing the temperature loss in the descaling step, by so operating that the temperature at entering the heating furnaces is lower (about 900° C) with respect to that of about 1100°C foreseen by the prior art, in order to reduce the scale production and consequently the problems relating thereto in the winding/unwinding step in the heating furnaces and between the inlet and outlet rolls, such as possible scale tracks on the strip itself.

These objects are achieved through a production line and relevant process as defined in the following claims.

These and other objects, advantages and features of the invention will be clearer from the following description, given by a non-limiting example, of a production line and relevant process, with reference to the annexed drawings wherein:
**Figures 1 and 2** are two diagrammatic plan views of two systems for manufacturing hot steel ultrathin strips from two casting lines;
**Figure 3** diagrammatically shows a side elevation view of a production line according to the present invention; and
**Figure 4** shows, in subsequent schematic views, the steps and sequences of the winding-unwinding-rolling cycle of the four heating furnaces being present in the plant of figure 3 when no use is made of the endless rolling system.

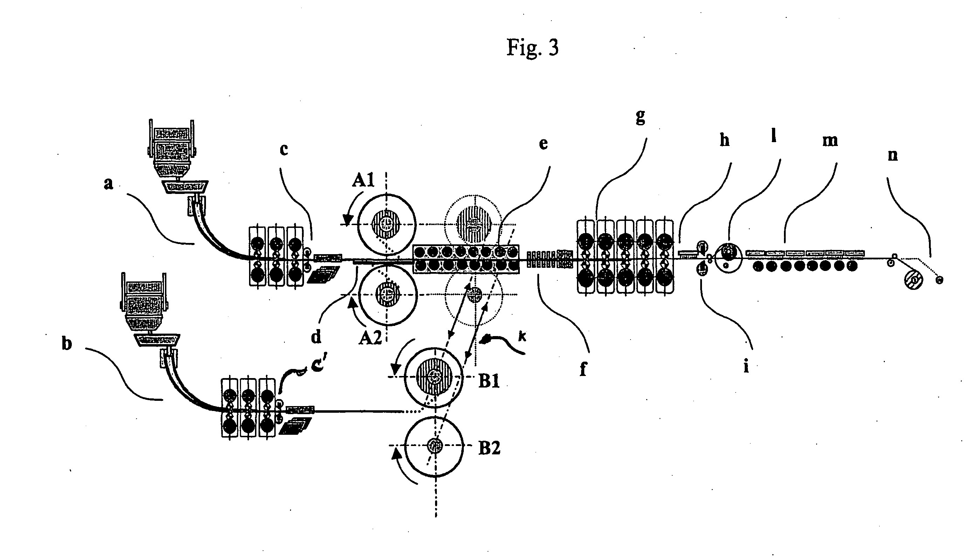

With reference to fig. 3, there are indicated with **a, b,** two thin slab casting lines, with liquid core reduction and direct rolling (roughing) connected thereto, as already disclosed in EP 1196256. Each line is followed by a shear **c, c'** for cutting the pre-strip, to be operated when the single strips (in batch) production is foreseen, to feed two respective pairs of gas supplied heating furnaces, being provided of internal mandrel A1, A2, pertaining to line **a,** and B1, B2 pertaining to line **b.** As it is known, said heating furnaces, mutually superimposed with mandrels parallel to each other in a vertical plane during their winding or unwinding operation, are able to be shifted and rotated on their axis to ensure that a pre-strip is received from the respective upstream line and is forwarded to a downstream finishing mill **g.** A bypass section **d** is provided between furnaces A1, A2 of the first pair of furnaces on the line **a** to allow, as a first type of operation, the endless rolling in said rolling mill **g** after a thermally insulated roller path e of the continuous pre-strip, not being cut by shear **c.**

Of course with such a system it is also possible to have the rolling operation for single strips in batch.To this end the pair of heating furnaces with mandrel B1, B2, staggered with respect to line **a** with which the rolling mill **g** is aligned, can move to such line **a** (in particular in place of the roller path **e,** also movable but to the opposite direction) as well as to come back to the initial position along a path **k,** there being provided means for such a movement. The system is completed by an induction heating furnace **f** downstream of the roller path **e** and upstream of the finishing mill **g** with subsequent compact, rapid cooling **h;** flying shear **i** for cutting the strips upon reaching the required weight; carousel-type winding reel **l,** to be used in the endless rolling without solution of continuity; roller path **m** for the transfer to cooling water sprays; and downcoiler **n** for the final winding of the product coming from both the casting lines with discontinuity.

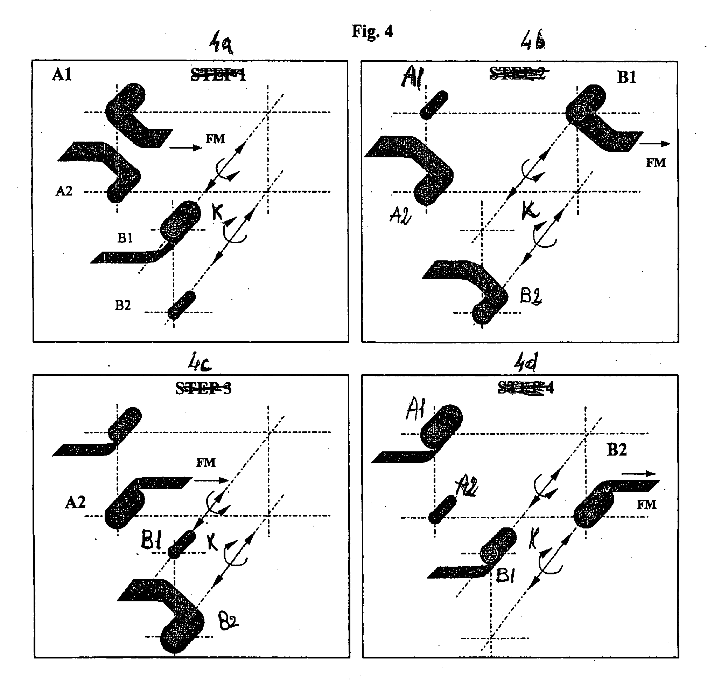

With reference to figure 4, with diagrammatic representation of pre-strip coils being wound on two pairs of heating furnaces A1, A2 and B1, B2, as well as of the path **k**, schematically represented by rectilinear arrows (while the bent arrows represent the rotation direction of the axes of the furnaces B1 and B2 during the rotation itself), there are pointed out steps and sequences of the winding-unwinding-rolling cycle of the four heating furnaces whenever the endless rolling system is out of operation. More precisely, in fig. 4a the situation is illustrated in which the content of furnace A1 is under rolling, as schematically indicated by arrow FM to show the direction toward the "finishing mill" **g.** Figure 4b represents the subsequent step in which the whole product of furnace A1 has been rolled, the pre-strip of a subsequent coil is still winding in the furnace A2 and under rolling there is the content of furnace B1 which in the meantime has been shifted along the finishing mill line, having completed its winding, while an other coil fed from line **b** is forming in furnace B2. In fig. 4c it is now the pre-strip coil of furnace A2, fully wound in the meantime, that feeds the finishing mill, while furnace B1, now empty, has reached back again its initial position and furnace B2 has almost completed its feeding with the coil which subsequently, as shown in Fig. 4d, is placed on the rolling line, upon shifting along the path **k,** while the coil in A1 is almost fully wound to restart again the cycle with the situation of fig. 4a, A2 is empty and B 1 starts winding a new coil on the line **b.**

From the above it results that through the transfer of only one pair of heating furnaces, with respect to the solution provided in EP 1196256, the advantage is obtained that ranges margins of time are available, as already pointed out above.

In addition, the induction furnace **f** being located downstream of the heating furnaces with mandrel, at the entry of the finishing rolling mill, rather than upstream of said furnaces, as disclosed in EP 1196256, results in having a temperature of about 900°C instead of 1100°C downstream of the casting and roughing line. Furthermore, during heating in the induction furnace **f**, **a** re-oxidation of the material takes place, which causes the scale formed in the previous "Cast Rolling" step to re-emerge, with the advantage of rendering possible the descaling with a lower water pressure and quantity, while improving at the same time the surface quality of the strips.

The pre-strip thickness is less than 30 mm and, to keep the coil weight in the movable furnaces B1 and B2 within acceptable limits, can even reach values lower than 15 mm. The thickness of the rolled strip can be comprised between 1.0 and 12.0 mm when single strips are to be manufactured from both casting lines a and **b**, by using both pairs of heating furnaces with mandrel. However there is also the possibility of obtaining ultrathin strips continuously, with thickness < 1,0 mm by using only the casting line a aligned with the rolling mill **g**.

It should be noted that the low descaling pressure and the reduced water level, with respect to those prevailing in the traditional "minimills" making use of the thin slab technology, involve a reduction of the temperature losses in the pre-strip, this being a necessary condition for making possible to produce ultrathin strips with a thickness < 1.0 mm.

## Claims

1. A production line for manufacturing hot steel strips comprising:
- two casting lines (**a, b**) for producing thin slabs of thickness ≤ 100 mm, only one casting line (**a**) being aligned with a rolling line comprising a rolling path (**e**) and a finishing rolling mill (**g**);
- two pairs of superimposed heating furnaces with mandrel (A1, A2), (B1, B2), one pair (A1, A2) on the casting line (**a**) and one pair on the casting line (**b**) respectively, each furnace being provided with an internal mandrel for winding/unwinding pre-strips having a thickness lower than 30 mm and produced by cutting the slabs, the furnaces (B1, B2) on the casting line (**b**) being movable and transferable along a transverse path (**k**) to line (**a**) and back to line (**b**);
- a bypass section (**d**) between said two furnaces (A1, A2) on line (**a**) for continuously feeding the slab to the finishing rolling mill (**g**) through said rolling path (**e**); and
- an induction furnace (**f**) provided downstream of said heating furnaces (A1, A2) on line (**a**) and immediately upstream of said finishing rolling mill (**g**).

2. A production line according to claim 1, further comprising on each line (**a, b**), upstream of said pairs of heating furnaces (A1, A2), (B1, B2) a respective shear (**c, c'**), wherein one of them (**c**) being on line (**a**) can be operated for the possible cutting of a pre-strip in the production with discontinuous rolling.

3. A production line according to claim 1, further comprising, downstream of the rolling mill (**g**), a flying shear (**i**), that can be operated for cutting the finished strip upon reaching the required weight, in the endless production.

4. A production line according to claim 1, wherein said bypass section (**d**) is formed as a thermally insulated roller path being aligned with said rolling line (**e, g**).

5. A production line according to claim 2, further comprising means for transferring said pair of furnaces (B1, B2) along said transverse path (**k**) in synchronism with the rolling steps of product from this one and the other pair of furnaces (A1, A2).

6. A production line according to claim 1, wherein said roller path (**e**) is movable in a transverse direction with respect to said line (**a**) and rolling mill (**g**) in a direction opposite to the transfer path (**k**) for the pair of furnaces (B1,B2).

7. A process for manufacturing ultrathin hot steel strips from the production line according to claim 1, the process comprising:
- a liquid core reduction step and subsequent roughing to a slab or pre-strip with thickness < 30 mm; and
- either continuously feeding the slab on the casting line (**a**) to the bypass section (**d**) provided between the heating furnaces (A1, A2) on the casting line (**a**), to the roller path (**e**) and to the finishing rolling step (**g**) to produce ultrathin strips having thickness < 1.0 mm; or
- cutting the slabs for obtaining pre-strips, winding the pre-strips on the heating furnaces (A1, A2) on the casting line (**a**) and on the heating furnaces (B1, B2) on line (**b**), moving the heating furnaces (B1, B2) from line (**b**) along a transfer path (**k**) to the casting line **(a)** to bring said heating furnaces (B1, B2) into correspondence with the rolling line (**e,g**) and and back to the casting line (**b**), transferring the unwound pre-strips to the roller path (**e**), to the induction furnace (**f**) and to the finishing rolling mill (**g**), to produce single strips of thickness from 1.0 to 12.0 mm,

8. A manufacturing process according to claim 7, further comprising an induction heating step between the step of heating the slab by means of said heating furnaces (A1, A2) and said finishing rolling step (**g**).

9. A process according to claim 7 or 8, wherein the pre-strip temperature at the end of the casting line (**a**), in correspondence with winding for the production of single strips, is of about 900°C.

## Patentansprüche

1. Produktionslinie zum Herstellen heißer Stahlstreifen umfassend:
Zwei Gießlinien (a, b) zum Erzeugen dünner Brammen in einer Dicke ≤100 mm, wobei nur eine Gießlinie (a) mit einer Walzlinie abgeglichen ist, die einen Walzpfad (e) und ein abschließendes Walzwerk (g) aufweist;
zwei Paar aufgesetzter Heizöfen mit Spindel (A1, A2), (B1, B2);
mit einem Paar (A1, A2) auf der Gießlinie (a) bzw. einem Paar auf der Gießlinie (b), wobei jeder Ofen mit einer Innenspindel zum Aufwickeln/Abwickeln von Voraus-Streifen ausgestattet ist, die eine Dicke kleiner als 30 mm haben und durch Durchschneiden der Brammen erzeugt werden, wobei die Öfen (B1, B2) auf der Gießlinie (b) bewegbar und entlang einem transversalen Pfad (k) zur Linie (a) und zurück zur Linie (b) transferierbar sind;
einen Bypass-Abschnitt (d) zwischen den zwei Öfen (A1, A2) auf Linie (a) zum kontinuierlichen Befördern der Bramme zum abschließenden Walzwerk (g) durch den Walzpfad (e); und
einen Induktionsofen (f), der stromabwärts der Heizöfen (A1, A2) auf Linie (a) und unmittelbar stromaufwärts des abschließenden Walzwerks (g) angeordnet ist.

2. Produktionslinie gemäß Patentanspruch 1, des weiteren umfassend auf jeder Linie (a, b), stromaufwärts der Paare der Heizöfen (A1, A2), (B1, B2) jeweils eine Metallschere (c, c'), wobei eine davon auf Linie (a) für das mögliche Durchschneiden eines Voraus-Streifens in der Produktion mit diskontinuierlichem Walzen betätigt werden kann.

3. Produktionslinie gemäß Patentanspruch 1, des weiteren umfassend stromabwärts des Walzwerks (g) eine fliegende Metallschere (i), die zum Durchschneiden des fertiggestellten Streifens beim Erreichen des erforderlichen Gewichts in der Endlos-Produktion betätigt werden kann.

4. Produktionslinie gemäß Patentanspruch 1, worin der Bypass-Abschnitt (d) als ein thermisch isolierter Walzpfad geformt ist, der mit der Walzlinie (e, g) abgeglichen ist.

5. Produktionslinie gemäß Patentanspruch 2, des weiteren umfassend Mittel zum Transferieren des Ofenpaares (B1, B2) entlang des transversalen Pfades (k) synchron mit den Walzschritten des Produkts von diesem Ofenpaar und dem anderen Paar (A1, A2).

6. Produktionslinie gemäß Patentanspruch 1. worin der Walzpfad (e) in einer transversalen Richtung bezüglich der Linie (a) und des Walzwerks (g) in eine Richtung entgegengesetzt zum Transferpfad (k) für das Ofenpaar (B1, B2) bewegbar ist.

7. Verfahren zum Herstellen ultradünner heißer Stahlstreifen aus der Produktionslinie gemäß Patentanspruch 1, wobei das Verfahren umfasst:
Einen Flüssigkeitskernreduktions-Schritt und anschließendes Schruppen einer Bramme oder eines Voraus-Streifens mit einer Dicke <30 mm; und
entweder ein kontinuierliches Befördern der Bramme auf die Gießlinie (a) zum Bypass-Abschnitt (d), der zwischen den Heizöfen (A1, A2) auf der Gießlinie (a) angeordnet ist, zum Walzpfad (e) und zum abschließenden Walzschritt (g) zum Erzeugen von ultradünnen Streifen einer Dicke <1,0 mm; oder
ein Durchschneiden der Brammen zum Gewinnen von Voraus-Streifen, wobei die Voraus-Streifen auf die Heizöfen (A1, A2) an der Gießlinie (a) und auf die Heizöfen (B1, B2) an der Linie (b) gewickelt werden, und die Heizöfen (B1, B2) von der Linie (b) entlang einem Transferpfad (k) zur Gießlinie (a) bewegt werden, um die Heizöfen (B1, B2) in eine Übereinstimmung mit der Falzlinie (e, g) und zurück zur Gießlinie (b) zu bringen, wobei die abgewickelten Voraus-Streifen zum Walzenpfad (e), zum Induktionsofen (f) und dem abschließenden Walzwerk (g) transferiert werden, damit einzelne Streifen der Dicke zwischen 1,0 und 12,0 mm erzeugt werden.

8. Herstellverfahren gemäß Patentanspruch 7, des weiteren umfassend einen Induktionsheiz-Schritt zwischen dem Schritt des Heizens der Bramme mittels der Heizöfen (A1, A2) und dem abschließenden Walzschritt (g).

9. Verfahren gemäß Patentanspruch 7 oder 8, worin die Temperatur des Voraus-Streifiens am Ende der Gießlinie (a), in Übereinstimmung mit dem Wickeln für die Erzeugung einzelner Streifen, ungefähr 900 °C beträgt.

## Revendications

1. Ligne de production pour fabriquer des bandes d'acier chaudes comprenant :
- deux lignes de coulée (a, b) pour produire de fines brames d'épaisseur ≤ 100 mm, seule une ligne de coulée (a) étant alignée avec une ligne de laminage comprenant un chemin de laminage (e) et un laminoir finisseur (g) ;
- deux paires de fours de réchauffage superposés avec des mandrins (A1, A2), (B1, B2), une paire (A1, A2) se trouvant respectivement sur la ligne de coulée (a) et une paire se trouvant respectivement sur la ligne de coulée (b), chaque four étant muni d'un mandrin interne pour enrouler/dérouler des prébandes ayant une épaisseur inférieure à 30 mm et produites en découpant les brames, les fours (B1, B2) situés sur la ligne de coulée (b) pouvant être déplacés et transférés le long d'un passage transversal (k) vers la ligne (a) et dans le sens de retour vers la ligne (b) ;
- une section de dérivation (d) entre lesdits deux fours (A1, A2) sur la ligne (a) pour alimenter de manière continue la brame vers le laminoir finisseur (g) en passant par ledit chemin de laminage (e) ; et
- un four à induction (f) fourni en aval desdits fours de chauffage (A1, A2) sur la ligne (a) et immédiatement en amont dudit laminoir finisseur (g).

2. Ligne de production selon la revendication 1, comprenant sur chaque ligne (a, b), en amont desdites paires de fours de réchauffage (A1, A2), (B1, B2), une cisaille respective (c, c'), l'une (c) d'entre elles, présente sur la ligne (a), pouvant être actionnée pour la possible découpe d'une prébande en cours de production sans interruption du laminage.

3. Ligne de production selon la revendication 1, comprenant en outre, en amont du laminoir (g), une cisaille volante (i), qui peut être actionnée lors de la production en continu pour découper la bande finie dès qu'elle atteint le poids requis.

4. Ligne de production selon la revendication 1, dans laquelle ladite section de dérivation (d) est formée en tant que chemin de laminage thermiquement isolé qui est aligné avec ladite ligne de laminage (e, g).

5. Ligne de production selon la revendication 2, comprenant en outre des moyens pour transférer ladite paire de fours (B1, B2) le long dudit passage transversal (k) en synchronisme avec les étapes de laminage du produit à partir de ladite paire de l'autre paire de fours (A1, A2).

6. Ligne de production selon la revendication 1, dans laquelle ledit chemin du laminage (e) peut être déplacée dans une direction transversale par rapport à ladite ligne (a) et au laminoir (g) dans une direction opposée au chemin de transfert (k) pour la paire de fours (B1, B2).

7. Procédé de fabrication de bandes d'acier ultrafines chaudes à partir de la ligne de production selon la revendication 1, le procédé comprenant les étapes consistant à :
- réduire un coeur liquide et le dégrossir ensuite pour donner une brame ou une prébande ayant une épaisseur < 30 mm ; et
- alimenter en continu la brame sur la ligne de coulée (a) vers la section de dérivation (b) fournie entre des fours de réchauffage (A1, A2) sur la ligne de coulée (a), vers le chemin de laminage (e) et vers l'étape de laminage de finissage (g) pour produire des bandes ultrafines ayant une épaisseur < 1,0 mm ; ou
- découper les brames pour obtenir des prébandes, enrouler les prébandes sur les fours de réchauffage (A1, A2) sur la ligne de coulée (a) et sur les fours de réchauffage (B1, B2) sur la ligne (b), déplacer les fours de réchauffage (B1, B2) depuis la ligne (b) le long d'un chemin de transfert (k) vers la ligne de coulée (a) pour mettre lesdits fours de réchauffage (B1, B2) en correspondance avec la ligne de laminage (e, g) et dans le sens de retour vers la ligne de coulée (b), transférer les prébandes déroulées vers le chemin de laminage (e), vers le four à induction (f) et vers le laminoir finisseur (g), pour produire des bandes uniques d'épaisseur comprise entre 1,0 et 12,0 mm.

8. Procédé de fabrication selon la revendication 7, comprenant en outre une étape de chauffage à induction entre l'étape de chauffage de la brame par lesdits fours de réchauffage (A1, A2) et ladite étape de laminage de finissage (g).

9. Procédé selon la revendication 7 ou 8, dans lequel la température de la prébande à l'extrémité de la ligne de coulée (a) est, en correspondance avec l'enroulage pour la production de bandes uniques, d'environ 900°C.
